(19) Europäisches Patentamt
European Patent Office
Office européen des brevets

(11) **EP 3 091 843 B1**

(12) **EUROPEAN PATENT SPECIFICATION**

(45) Date of publication and mention
of the grant of the patent:
**04.07.2018 Bulletin 2018/27**

(21) Application number: **15701586.8**

(22) Date of filing: **06.01.2015**

(51) Int Cl.:
*A23G 1/00* *(2006.01)*      *A23G 1/54* *(2006.01)*
*A23G 3/34* *(2006.01)*      *A23G 3/54* *(2006.01)*
*A23L 5/00* *(2016.01)*

(86) International application number:
**PCT/IB2015/050089**

(87) International publication number:
**WO 2015/101965 (09.07.2015 Gazette 2015/27)**

(54) **PROCESS FOR PRODUCING CONFECTIONS COMPRISING CAPSULES**

VERFAHREN ZUR HERSTELLUNG VON SÜSSWAREN MIT KAPSELN

PROCÉDÉ DE PRODUCTION DE CONFISERIES COMPRENANT DES CAPSULES

(84) Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(30) Priority: **06.01.2014 GB 201400137**

(43) Date of publication of application:
**16.11.2016 Bulletin 2016/46**

(73) Proprietor: **Kraft Foods R & D, Inc.
Deerfield, IL 60015 (US)**

(72) Inventors:
• **WOOD, Xavier**
  **Birmingham B30 2LU (GB)**
• **MELLORS, Mark**
  **St Ives**
  **Cambridgeshire PE27 4LG (GB)**
• **HAINES, Rod**
  **St Ives**
  **Cambridgeshire PE27 4LG (GB)**

(74) Representative: **Bailey, Jennifer Ann
Marks & Clerk LLP
Alpha Tower
Suffolk Street Queensway
Birmingham B1 1TT (GB)**

(56) References cited:
**CN-A- 103 283 919      US-A- 4 430 351
US-A1- 2003 124 225      US-A1- 2005 100 640
US-A1- 2008 317 824      US-A1- 2011 081 451**

• **SHANKER L GUPTA AND S ESMAIL TABIBI ED -
LIU ET AL: "Chapter 21. Soft Gelatin Capsules
Development", 2008, WATER-INSOLUBLE DRUG
FORMULATION, SECOND EDITION, BOCA
RATON [U.A.], PAGE(S) 589 - 607, XP008175513,
ISBN: 978-0-8493-9644-1 page 589, paragraph
first - page 593, paragraph first**

**Description**

The present invention relates to a process for preparing a confectionery composition and compositions made thereby.

There is a continuing desire to provide new products and eating experiences for consumers. Liqueur filled chocolates are popular and provide a liquid sensation when the consumer bites through the chocolate shell and releases the filling. However, they are quite messy to consume. Caramel filled chocolates are also popular but provide a different impact on the consumer due to the high viscosity of the caramel filling.

WO2010/031502 (NESTEC) describes mixing edible liquid-filled capsules into liquid chocolate or other fat-based material and then depositing the mixture into a mould. The capsules comprise a wall which contains the liquid filling and this wall may comprise a hydrocolloid gel for example. No teaching is provided with regard to the preparation of such liquid filled capsules.

US 2011/081451 discloses a spherical core-shell particle having a core comprising a core liquid, a hardened polysaccharide shell surrounding the core, and optionally a coating layer.

US 2003/124225 discloses ingestible, chewable or aqueous soluble non-toxic capsules containing ethanol compositions.

US 2005/100640 discloses a microcapsule edible candy comprising a liquid-impermeable external candy shell and a liquid candy filling within the external candy shell.

The present invention provides a process for preparing a confectionery composition that alleviates one or more of the problems mentioned above.

According to a first aspect of the present invention there is provided a process for the preparation of a confectionery composition comprising

providing a first sheet of edible film having a plurality of first recesses therein and a second sheet of edible film;

supplying a liquid filling to the first recesses; and

contacting the first sheet with the second sheet, whereby sealed capsules containing the liquid filling are formed, wherein molten chocolate is applied to the first recesses before the liquid filling is supplied to the first recesses.

In one embodiment the second sheet does not have recesses therein; it is a flat sheet.

In another embodiment the second sheet of edible film has a plurality of second recesses therein. In one such embodiment, the process comprises

providing a first sheet of edible film having a plurality of first recesses therein and a second sheet of edible film having a plurality of second recesses therein;

supplying a liquid filling to the first recesses and then contacting the first sheet with the second sheet, the first and second recesses being in register whereby sealed capsules containing the liquid filling are formed,

wherein molten chocolate is applied to the first recesses before the liquid filling is supplied to the first recesses.

In one embodiment each of the first and second edible sheets has a thickness of no more than 3, 2, 1, 0.5, 0.3 or 0.1 mm. In one embodiment each of the first and second sheets has a thickness of at least 0.05, 0.1, 0.2, 0.3 0.5, 1 mm.

In one embodiment the edible film sheet comprises one or more of protein, polysaccharide (including starch, cellulose), and hydrocolloid (including gelatine, carrageenan, agar, xanthan gum, locust bean, and gum arabic). The choice of film will affect the texture of the capsule and the impact on the consumer. A polysaccharide capsule such as starch or cellulose would provide a crisp sensation when placed in the mouth of the consumer. A hydrocolloid would more likely disperse in the mouth so that it is less noticeable to the consumer.

In one embodiment the edible film comprises one or more of gelatine, alginate, starch, modified starch, pectin, carrageenan, agar, xanthan gum, locust bean gum and combinations thereof. In one embodiment the edible film comprises polysaccharide such as starch.

If desired, the edible film sheet can be coated with an additional ingredient to improve its properties. For example, the edible film sheet can be coated with a moisture barrier which protects it from the liquid filling or from the environment. In a particular embodiment the edible film is a polysaccharide film, which is coated with a moisture barrier.

The first recesses and the second recesses (when present) will typically be produced by pressing a flat film into shape. In one embodiment the process comprises a first step of providing first recesses by passing the first edible film sheet through a pair of contra-rotating forming rolls. When second recesses are desired they can be provided by passing the second edible film sheet through a pair of contra-rotating forming rolls.

The dimensions (size and the shape) of the capsules are determined by the size and the shape of the first recesses and the second recesses (when present).

In one embodiment all of the first recesses have the same dimensions and all of the second recesses have the same dimensions (which may be the same as or different from the first recesses). In this way, all of the resulting chocolate capsules will have the same dimensions.

In one embodiment the first and/or second recesses have a variety of dimensions. In this way, the resulting chocolate capsules will have a variety of dimensions. In one embodiment, the first and/or second edible film sheet comprises at least 2, 3, 4, 5 or 6 types of recess having different dimensions.

The recesses can have a variety of shapes to achieve the desired shape in the resulting capsules. For example, hemi-spherical capsules can be obtained when the first recesses are hemispherical and the second sheet is a flat sheet (no second recesses). As another example, a spherical capsule can be obtained when two hemispherical recesses (one in each sheet) are aligned with one another (in register). Typically, the recesses will have a rounded peripheral extent.

The following comments apply to at least one first or second recess and/or the average properties of all of the first and/or second recesses.

In one embodiment the recess(es) is/are hemispherical or elongate. It will be understood that a hemispherical recess provides a circular outline in the surface of the sheet. In alternative embodiments the recesses provide an outline in the surface of the edible sheet which is oval, square, rectangular, triangular, pentagonal, hexagonal or the shape of any other regular polygon. The outline of the recess(es) could also have a star shape, a lozenge shape, an egg shape, a heart shape etc. In a particular embodiment all of the recesses are hemispherical. It will be understood that the first and second recesses must provide the same outline in order to provide a good seal. However, the first and second recesses need not be identical in all aspects. In one embodiment the first recess is hemispherical and second recess is cylindrical. Both provide a circular outline in the edible sheet and therefore a good seal.

In one embodiment the recess(es) has/have a diameter of at least 4, 5, 6, 7, 8, 9, 10, 11, 12, 13, 14, 15, 20, 25 or 30mm. In one embodiment the recess(es) has/have a diameter of no more than 60, 50, 40, 30, 20 or 10mm. In a particular embodiment the recess(es) has/have a diameter of from 4 to 8mm or from 5 to 7mm. The diameter of a recess is measured across the surface of the sheet.

In one embodiment the recess(es) has/have a depth of at least 2, 2.5, 3, 3.5, 4, 4.5, 5, 5.5, 6, 6.5, 7 or 7.5, 10, 12.5 or 15mm. In one embodiment the recess(es) has/have a depth of no more than 30, 25, 20, 15, 10, or 5mm. The depth of a recess is measured perpendicular to the surface of sheet. In one embodiment the first and second recesses have the same depth. In another embodiment the first and second recesses have different depths.

Molten chocolate is applied to the first recesses before supplying the liquid filling to the recesses. Typically the molten chocolate will be allowed to set before the liquid filling is supplied. In a particular embodiment molten chocolate is applied to the first recesses so as to coat the entire surfaces of the recesses, thereby providing chocolate coated first recesses.

In one embodiment molten chocolate is applied to the second edible sheet or the second recesses (when present) before the first edible sheet is contacted with the second edible sheet to form the capsules. In a particular embodiment where the second edible sheet comprises second recesses the molten chocolate is applied to the second recesses so as to coat the entire surface of the recesses, thereby providing chocolate coated second recesses.

According to a specific embodiment of the first aspect of the present invention there is provided a process for the preparation of a confectionery composition comprising providing a first sheet of edible film having a plurality of first recesses therein and a second sheet of edible film having a plurality of second recesses therein;

coating the first and second recesses with molten chocolate;

causing the molten chocolate on the first sheet to set and subsequently supplying a liquid filling to the chocolate coated first recesses; and

contacting the chocolate on the first sheet with the chocolate on the second sheet, the latter being at least partially molten and with the first and second recesses being in register, whereby sealed chocolate capsules containing the liquid filling are formed.

It will be understood that the product of this process is a chocolate capsule having a coating of edible film. In this embodiment it is the chocolate, rather than the edible film, which seals the liquid filling therein.

The chocolate on the first sheet can be caused or allowed to solidify by cooling. Cooling may be passive, i.e. at ambient temperature. Alternatively, cooling can be active, e.g. at a temperature below ambient temperature. In one embodiment the chocolate on the first sheet is caused to set by exposure to a temperature of less than 15, 12, 10 or 5°C.

The capsules may be interconnected by a thin web of edible film (which may also comprise chocolate). If desired, the web can be removed by means of a deflashing step.

In one embodiment the process comprises an additional step of separating the capsules from the web. In one embodiment the capsules are separated from the web by tumbling in a drum which is perforated so that only the web pieces pass through. In one embodiment the capsules are separated from the web by passing through a pair of contra-rotating rollers.

In one embodiment the process comprises an additional step of panning the capsules. Panning increases the robustness and stability of the capsules.

In one embodiment the process comprises an additional step of placing a plurality of the capsules in an edible shell. The capsules may be separated from the web before being placed in the edible shell.

The resultant product provides a non-messy liquid sensation when the shell is bitten into by the consumer. The presence of the liquid in a plurality of capsules renders the composition convenient to eat, without significant risk of spillage.

In one embodiment the edible shell is a sugar-based confectionery shell or a fat-based confectionery shell. In one embodiment, the fat-based confectionery shell is a chocolate shell.

In one embodiment, the capsules are placed in the edible shell, which is then is backed off and thereby encloses the capsules. Alternatively, the capsules are placed in the edible shell, which remains open so that the capsules remain visible.

There may be provided a confectionery composition comprising liquid-filled capsules which are interconnected by a web,

wherein the web comprises an edible film.

The capsules comprise chocolate. Such capsules can be obtained by applying chocolate to the first recesses and/or the second edible film or second recesses. In particular embodiment the capsules are chocolate capsules such that the chocolate encloses the liquid filling. Such capsules can be obtained by coating the first recesses with chocolate and coating the second edible sheet/second recesses with chocolate.

In one embodiment the capsules are interconnected by a web having substantially the same thickness throughout.

There may be provided a confectionery composition comprising a capsule having a capsule wall which encloses a liquid filling, wherein the capsule wall comprises polysaccharide or protein.

There may be provided a confectionery composition comprising a capsule having a capsule wall which encloses a liquid filling,

wherein the inner surface of the capsule wall is at least partially coated with chocolate.

It will be understood that the inner surface of the capsule wall is adjacent to the liquid filling.

There may be provided a confectionery composition comprising at least one chocolate capsule having a liquid filling therein, wherein the chocolate capsule is at least partially coated with an edible film.

In one embodiment of the present invention there is provided a confectionery composition comprising an edible shell having a plurality of chocolate capsules therein, the chocolate capsules having a liquid filling therein, wherein the chocolate capsules are at least partially coated with an edible film.

In one embodiment the edible shell has a length of at least 3, 4, 5, 6, 8, 10, 12, 15, 20 or 25 cm. In one embodiment the edible shell has a length of less than 30, 25, 20, 15 or 10 cm.

In one embodiment the edible shell has a thickness of at least 1, 2, 3, 4, 5, 6, 7, 8, 9 or 10mm. In one embodiment the edible shell has a thickness of less than 15, 12, 8, 6, or 4mm.

In one embodiment the edible shell has at least 3, 4, 5, 6, 7, 8, 9, 10, 11, 12, 13, 14, 15, 20, 25, 30, 40, 50, 60, 70 or 80 capsules therein. In one embodiment, the edible shell has no more than 200, 150, 100, 75, 65, 55, 45, 35, 25, 15 or 10 capsules therein.

In one series of embodiments the plurality of chocolate capsules constitute at least 10, 20, 30, 40, 50, 60, 70, or 80wt% of the chocolate composition. In one series of embodiments the plurality of capsules constitute less than 85, 75, 65, 55, 45, 35, 25 or 15wt% of the composition.

The edible shell has a cavity therein. In one series of embodiments the plurality of capsules constitute at least 25, 30, 35, 40, 45, 50, 55, 60, 65, 70, 75 or 80vol% of the cavity. In one series of embodiment the capsules constitute less than 85, 80, 75, 70, 65, 60, 55, 50, 45, 40 or 35vol% of the cavity. In one embodiment the capsules constitute from 40 to 70vol% of the shell cavity.

In one embodiment, the capsules are close packed within the shell so that they cannot move over one another. The close packing is dictated by the size of the capsules and the size of the cavity. For instance, a plurality of spherical capsules of the same size will be limited to 74% packing density if they can be arranged in a hexagonal close packing structure. If the plurality of spherical capsules is confined to a simple cubic packing structure, the packing density is limited to 52%. Simulations have shown that spheres randomly filled into a volume reach packing efficiencies of between 60% and 68%. It is thus understood that, other variations aside, the volume of spherical capsules in close a packed shell can be expected to be in the region of between 52% and 74% of the volume of the cavity in a first approximation. The volume of solid capsules in the cavity can be lower if efficient packing densities are not achieved and lower or higher if the capsules are not spherical.

In one embodiment, all of the capsules in the edible shell are identical e.g. they have the same size, shape, liquid filling etc. In another embodiment the edible shell has a variety of capsules therein. In a particular embodiment the edible shell comprises two types of capsule therein.

In one embodiment the edible shell has no further liquid or solid component therein, in addition to the capsules.

In one embodiment the edible shell has at least one further liquid and/or a solid component therein, in addition to the capsules. The liquid component can be the same as or different from the liquid filling. In one embodiment the solid component is not chocolate. In one embodiment the edible shell comprises at least 2, 4, 6, 8, 10, 12, or 15wt% of a further liquid and/or solid component in addition to the capsules.

The following comments apply to all aspects of the invention.

The viscosity of the liquid will affect the sensation perceived by the consumer; the lower the viscosity the more liquid the sensation. The viscosity of the liquid filling should be greater than water but less than that of a conventional soft caramel. Viscosity can be described in a number of ways.

The viscosity of common foodstuffs is known from the literature. For example, the following values were obtained from a Viscosity Chart on the BASCO website: http://www.bascousa.com/images/advisors/407%20condensed.pdf.

| | Absolute viscosity (cP) | Temperature (°F/°C) | | Absolute viscosity (cP) | Temperature (°F/°C) |
|---|---|---|---|---|---|
| Butter fat | 42 | 110/43 | Corn syrup | 12000 | 130/54 |
| Butter fat | 20 | 150/66 | Gelatin, 37%solids | 1190 | 110/43 |
| Cottage cheese | 30000 | 65/18 | Fruit juice | 55-75 | 65/18 |
| Cocoa butter | 50 | 140/60 | Honey | 1500 | 100/38 |
| Cocoa butter | 0.5 | 210/99 | Mashed potato | 20000 | 100/38 |
| Condensed milk | 40-80 | 100-120/38-49 | Mayonnaise | 20000 | 70/21 |
| Condensed milk, 75% solids | 2160 | 70/21 | Molasses | 1400-13000 | 100/38 |
| Cream, 45% fat | 48 | 60/16 | Orange juice concentrate (30 brix) | 630 | 70/21 |
| Milk | 2.0 | 65/18 | Orange juice concentrate (30 brix) | 91 | 175/79 |
| Yoghurt | 152 | 105/41 | Sorbitol | 200 | 70/21 |
| Caramel | 400 | 140/60 | Toffee | 87000 | 100/38 |
| Chocolate | 17000 | 120/49 | Tomato paste, 30% | 195 | 65/18 |
| Chocolate milk | 280 | 120/49 | Olive oil | 40 | 100/38 |
| Coffee, 30-40% liquor | 10-100 | 70/21 | Palm oil | 43 | 100/38 |

The liquid filling may be a Newtonian liquid or a non-Newtonian liquid. The viscosity of Newtonian liquids is independent of the rate of shear (mixing) but changes with temperature (e.g. water, ethanol, glycerol). Non-Newtonian liquids (e.g. chocolate) are affected by the presence of solids in suspension so their viscosity depends on temperature and the rate of shear.

Viscosity can be measured using a rotational viscometer (or rheometer) such as the Bohlin, Brookfield or Haake viscometer. In one embodiment viscosity is measured using a Bohlin CV050 rheometer. In another embodiment viscosity is measured using a Brookfield RVDVIII Ultra rheometer.

In one embodiment the liquid filling is a Newtonian liquid and has a viscosity measured at 25°C of no more than 20, 15, 10, 5, 3, 2, 1.0, 0.50, 0.10, 0.01 or 0.001Pa.s. In one embodiment the liquid filling is a Newtonian liquid and has a viscosity measured at 25°C of at least 0.001, 0.01, 0.05, 0.1, 0.5, 1, 2, 3, 4 or 5Pa.s. In a particular embodiment the liquid filling has a viscosity at 25°C of from 0.05 to 0.07. For comparison, water has a viscosity at 25°C of approximately $8.94 \times 10^{-4}$Pa.s.

The viscosity of the liquid filling can be measured using a Bohlin CV050 rotational rheometer at a constant temperature of 25°C. The effect of shear can be determined by increasing the shear stress from 1 to 10Pa.

In one series of embodiments the liquid filling has a viscosity measured at $10s^{-1}$ of less than 100, 85 or 60Pa.s at 25°C; of less than 50, 35 or 10Pa.s at 35°C; and/or less than 25, 15, 5 or 1Pa.s at 45°C.

In one series of embodiments the liquid filling has a viscosity measured at 30°C of less than 15Pa.s at $1s^{-1}$, less than 13Pa.s at $10s^{-1}$ and/or less than 7Pa.s at $100s^{-1}$.

The viscosity of the liquid filling can be described with reference to the Power Law (or Ostwald) Model. This fits a typical viscosity vs. shear rate curve and takes the form of:

$$y = Kx^{n-1}$$

Where y = viscosity, x = shear rate, K = consistency coefficient (viscosity at a shear rate of $1s^{-1}$) and n=power law index (or flow law index).

n is a measure of how Newtonian the liquid is. A Newtonian liquid has n = 1, such that y = K i.e. no change in viscosity with shear rate. For a shear thinning liquid n is greater than 0 but less than 1. For a shear thickening liquid n is greater than 1.

In one embodiment the liquid filling has a power law index (n) of from 0.8 to 1.2 or from 0.9 to 1.1. The power law index (n) can be calculated using the following protocol (provided by Brookfield):
Instrument: Brookfield RVDVIII Ultra rheometer fitted with a Small Sample adaptor and spindle/chamber SC4-15/7R. Temperature: 25°C. RPM down-ramp: 50, 40, 30, 20, 10, 5, 2.5, 1.5. 1 minute hold at each speed before recording viscosity value. Plot Viscosity vs. Shear rate to determine n.

The pour point of a liquid is the lowest temperature at which it will flow before it becomes semi-solid and loses its flow characteristics. In one embodiment the liquid filling has a pour point of less than 25°C, 20°C, 15°C, 10°C, 5°C or 3°C.

The liquid filling can be any confectionery material which is liquid at standard ambient temperature and pressure (SATP, 25°C and 100kPa) and includes an aqueous solution, a water-in-oil emulsion or an oil-in-water emulsion. It will be understood that the liquid filling must be edible.

In one embodiment, the at least one liquid component is selected from the group consisting of fruit juice; vegetable juice; fruit puree; vegetable puree; fruit sauce; vegetable sauce; honey; sugar syrup; polyol syrup; hydrogenated starch hydrolysates syrup; emulsions; vegetable oil; glycerin; propylene glycol; ethanol; liqueurs; ganache, dairy- based liquids such as milk, cream, etc.; fondant; an isomalt-comprising solution; and combinations thereof. In one such embodiment the liquid filling is selected from the group consisting of fruit juice; vegetable juice; fruit puree; fruit pulp; vegetable pulp; vegetable puree; fruit sauce; vegetable sauce; sugar syrup; polyol syrup; glycerin; caramel and combinations thereof.

In one embodiment the liquid filling is a flavoured sugar or sugar substitute syrup. In one such embodiment the syrup comprises bulk sweetener (e.g. sucrose or polyol), water and flavouring. In one embodiment the sugar or sugar substitute syrup has a solids content of no more than 75%, no more than 60%, no more than 50 or no more than 40%. A reduction in solids content is expected to reduce the viscosity of the liquid filling and thereby provide a greater contrast with the solid chocolate capsule. In one embodiment the liquid filling is selected from one or more of almond, apple, apricot, banana, basil, butterscotch, blueberry, caramel, cardamom, cherry, chocolate, hazelnut, kiwi, lime, mango, melon, orange, peach, raspberry, strawberry, vanilla syrup. Suitable syrups are commercially available and include those sold under the Monin® brand.

Sugars include sucrose, glucose, fructose, lactose and maltose and any combination thereof). Sugar substitutes include sugar alcohols such as sorbitol, xylitol, mannitol, lactitol and isomalt.

In one embodiment the liquid filling additionally comprises pharmaceutical additives such as medicaments, breath fresheners, vitamins, minerals, caffeine, and mixtures thereof.

A low water activity will assist in rendering the liquid filling microbiologically stable. In one embodiment the liquid filling has a water activity measured at 25°C of 1 or less than 1.0, 0.95, 0.9, 0.8, 0.7, 0.65 or 0.60.

The following comments apply to at least one capsule and/or the average properties of all of the capsules in a given product.

In one embodiment the capsule(s) comprise(s) at least 5, 8, 10, 12, 15, 18, 20 or 25wt% liquid filling. In one embodiment the capsule(s) comprise(s) less than 50, 40, 30, 25, 20, 16, 12, 10 or 5wt% liquid filling. In a particular embodiment the capsule(s) comprise(s) from 10 to 20wt% liquid filling.

The nature of the process limits the volume of liquid filling which can be contained within the capsules. The maximum volume of liquid filling is that which can fit within the first recesses. If the second edible sheet comprises second recesses, the capsules will also contain gas (typically air) in addition to the liquid filling. The minimum volume of gas is that which fits within the second recesses.

In one embodiment the capsule(s) comprise at least 3, 5, 8, 10, 12, 15, 18, 20 or 25vol% liquid filling. In one embodiment the capsule(s) comprise(s) less than 25, 20, 16, 12, 10 or 5vol% liquid filling. In a particular embodiment the capsule(s) comprise(s) from 5 to 10vol% liquid filling.

In one embodiment the capsule(s) comprise(s) at least 3, 5, 8, 10, 12, 15, 18, 20, 25, 30, 35, 40 or 45vol% gas. In one embodiment the capsule(s) comprise(s) less than 35, 30, 25, 20, 16, 12, 10 or 5vol% gas. In a particular embodiment the capsule(s) comprise(s) from 5 to 10vol% gas.

In one embodiment the capsule(s) is/are generally hemi-spherical, spherical, ovoid, cubic, cuboid, star shaped, lozenge shaped or heart shaped. In a particular embodiment all of the capsules are spherical.

In one embodiment the capsule(s) has/have an outer diameter of at least 4, 5, 6, 7, 8, 9, 10, 11, 12, 13, 14 or 15mm. In one embodiment the capsule(s) has/have an outer diameter of no more than 40, 30, 20 or 10mm. In a particular embodiment the capsule(s) has/have an outer diameter of from 4 to 8mm or from 5 to 7mm.

In one embodiment the capsule(s) has/have an inner diameter (the size of the cavity within the capsule which contains the liquid filling) of at least 2, 2.5, 3, 3.5, 4, 4.5, 5, 5.5, 6, 6.5, 7 or 7.5mm. In one embodiment the capsule(s) has/have an inner diameter of less than 25, 10, 15, 10 or 5mm. In a particular embodiment the capsules have an inner diameter of from 2 to 5mm or from 2.5 to 4mm.

In one embodiment the capsule(s) has/have a wall thickness (difference between inner and outer diameters) of at least 0.5, 0.75, 1, 1.25, 1.5, 1.75, 2, 2.5, 3 or 3.5mm. In one embodiment the capsule(s) has/have a wall thickness (difference between inner and outer diameters) of less than 20, 15, 10, 5, 4.5, 4, 3, 3.5, 3, 2.5 2, 1.75, 1.5, 1.25, or 1mm.

In one embodiment the capsule(s) wall has/have uniform thickness no matter where it is measured. By uniform, we mean that the wall thickness of the capsule varies by no more than 15, 10, or 5% as compared to the average wall thickness of that capsule. The dimensions (size and shape) of the edible shell can vary from small bite-size pieces to large tablets. The present invention is particularly beneficial for such larger products where a liquid filling would otherwise be very messy to consume.

The term 'chocolate' in the context of the present invention is not restricted by the various definitions of chocolate provided by government and regulatory bodies. A 'chocolate' may be a dark chocolate, a milk chocolate or a white chocolate.

The chocolate for the chocolate capsules and optionally the edible shell comprises at least one fat. The fat may be cocoa butter, butterfat, a cocoa butter equivalent (CBE), a cocoa butter substitute (CBS), a vegetable fat that is liquid at standard ambient CBEs are defined in Directive 2000/36/EC. Suitable CBEs include illipe, Borneo tallow, tengkawang, palm oil, sal, shea, kokum gurgi and mango kernel. CBE's are usually used in combination with cocoa butter. In one embodiment, the chocolate comprises no more than 5wt% CBE's.

The chocolate may comprise a cocoa butter substitute (CBS) (sometimes known as a cocoa butter replacer, CBR) in place of some or all of the cocoa butter. Such chocolate materials are sometimes known as compound chocolate. Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS nonlaurics include soya, cottonseed, peanut, rapeseed and corn (maize) oil.

In one embodiment the chocolate comprises fat (e.g. cocoa butter or a cocoa butter equivalent or cocoa butter substitute), a bulk sweetener (e.g. a sugar or sugar substitute) and non-fat cocoa solids (e.g. from cocoa liquor or cocoa mass).

Embodiments of the invention will now be described by way of example only in which:

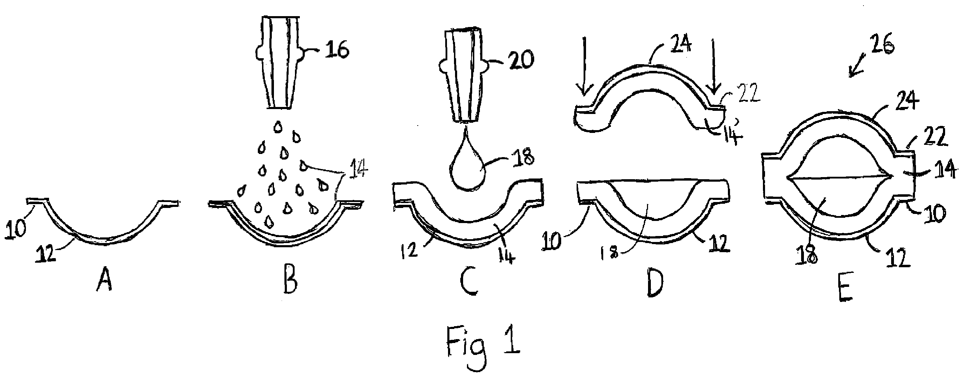

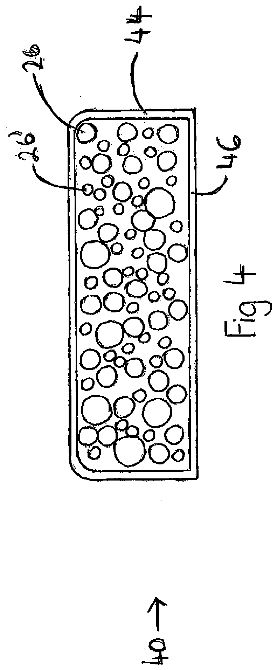

Figures 1, 2 and 3 shows schematic diagrams of a process in accordance with an embodiment of the invention. Figure 4 is a schematic diagram of a chocolate bar.

Referring to figure 1 there is shown the production of a single chocolate capsule in steps A to F. Referring to step A, there is shown a portion of a first edible film sheet 10 having a first recess 12 therein. In step B molten chocolate 14 is sprayed onto the first sheet 10 by means of a nozzle 16 to coat the entire surface of the first recess 12 and is allowed to cool and solidify. In step C, a liquid filling 18 is poured into the chocolate coated first recess 12 by means of a nozzle 20. Meanwhile, a second edible sheet 22 having a second recess 24 is coated with chocolate 14' (not shown) and inverted. The molten chocolate 14' on the second sheet 22 contacts the chocolate 14 on the first sheet 10 to seal the liquid filling 18 between the first and second recesses 12,24 and thereby form a chocolate capsule 26. The chocolate capsule 26 is half filled with the liquid filling 18.

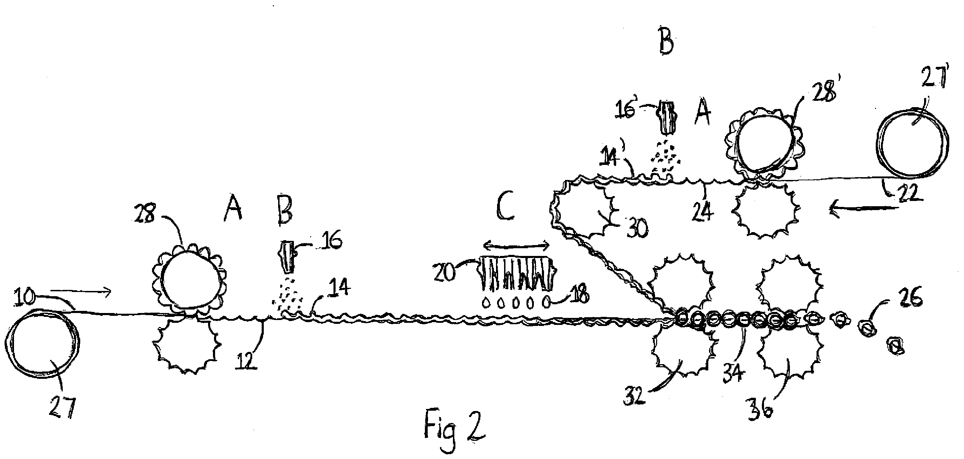

Fig 2 shows the same process in the context of a typical production line. The first sheet of edible film 10 is provided on a roller 27 and passes through forming elements 28 to generate the first recesses 12. Chocolate 14 is then sprayed onto the sheet 10 to coat the surface of all of the first recesses 12 and is allowed to cool. The liquid filling 18 is supplied to the chocolate coated recesses 12 by means of a series of nozzles 20. Simultaneously the second edible sheet 22 passes from a roller 27' through a second pair of forming elements 28' to generate the second recesses 24. Chocolate 14' is supplied to the surface of the recesses 24. While the chocolate is still at least partially molten, the second sheet 22 is inverted by means of a further roller 30. The chocolate 14' on the second sheet 22 contacts the chocolate 14 on the first sheet 10 as it passes through a pair of contra-rotating sealing rolls 32. The first and second recesses 12,24 are in register (match up) such that liquid filling 18 is enclosed in a plurality of capsules 26 which are interconnected by a web 34 consisting of chocolate and edible film. The web 34 is then passed through a further pair of rollers 36 to separate the capsules 26 from the web 34.

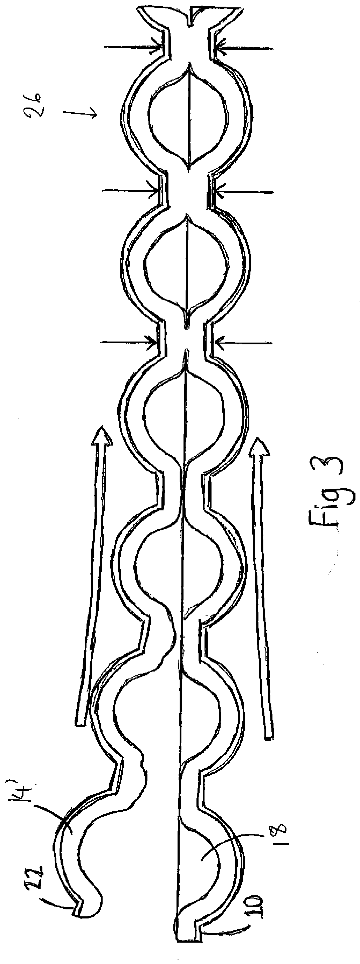

Fig 3 demonstrates how the molten chocolate 14' on the second sheet 22 is used to seal the liquid 18 and thereby form the capsules 26.

Fig 4 shows a cross-section of a chocolate bar 40 comprising a plurality of liquid-filled chocolate capsules 26, 26' therein. There are two sizes of capsules; the capsules 26 have a larger diameter than the capsules 26'. The capsules are prepared using the method shown in figures 1 to 3 using two sizes of the first recesses and two sizes of second recesses. The capsules 26,26' are then deposited in a chocolate shell 44 which is subsequently backed off with additional chocolate 46 to enclose the capsules 26, 26'.

METHODOLOGY

The viscosity of the liquid filling was determined using a Bohlin CV050 rheometer at constant temperature (25°C) with shear stress being increased from 1 to 10Pa. The following example shows the measurement of the viscosity of a commercially available caramel syrup (Le sirop de Monin® caramel, available from Monin (Bourges, France)). The syrup has the following ingredients: sugar, water, flavouring, natural plant extracts, colouring agent: E150a, acidifying agent: citric acid.

| Viscosity @ 25°C (Pa.s) | | |
|---|---|---|
| Shear Rate (1/s) | Shear Stress (Pa) | Viscosity (Pa.s) |
| 16.3 | 1 | 0.0612 |
| 20.9 | 1.29 | 0.0617 |
| 26.7 | 1.67 | 0.0624 |
| 34.3 | 2.15 | 0.0628 |
| 44.1 | 2.78 | 0.0631 |
| 56.6 | 3.59 | 0.0634 |
| 72.9 | 4.64 | 0.0636 |
| 94.2 | 5.99 | 0.0636 |
| 121.5 | 7.74 | 0.0638 |
| 156.5 | 10 | 0.0639 |

It can be seen that the viscosity of the caramel changes only slightly as the shear rate increases from 16.3 to $156.5s^{-1}$; it is around 0.06Pa under the conditions of measurement.

EXAMPLE 1 - A chocolate bar consisting of a chocolate shell with chocolate capsules having a liquid filling (Monin ® caramel) therein.

The chocolate is a conventional milk chocolate (density 1265kg/m$^3$) and the caramel is as described above.

The chocolate capsules were made using the process shown in figures 1 to 3. The edible film is a gelatine film having a thickness of 1mm and the recesses in the first and second sheets are hemispherical with a diameter of 10mm. Hence the resulting capsules are spherical, having an outer diameter of 12mm (= recess diameter (10mm) + 2 x film thickness (1mm)). The first and second recesses were coated with chocolate to a thickness of 1mm such that the capsule has a total wall thickness (edible film + chocolate) of 2mm and a cavity having a diameter of 8mm (= recess diameter (10mm) - 2 x chocolate thickness (1mm)).

The volume of a sphere is calculated using the formula $4/3\pi r^3$. Hence the total volume of the capsule is $4/3\pi$ x12$^3$ (7328mm$^3$) and the total volume of the cavity within the capsule is $4/3\pi$ x 8$^3$ (2145mm$^3$). If the cavity was entirely filled with caramel the filling would constitute approximately 30% (8$^3$/12$^3$) of the capsule. However, the cavity within the capsule was half-filled with liquid so the caramel filling constituted approximately 15vol% of the capsule.

The capsules were placed in a pre-formed chocolate shell having dimensions of 20mmx20mmx100mm and backed off with chocolate. The resulting chocolate bar provided a liquid sensation when bitten into without spillage of the low viscosity liquid.

EXAMPLE 2 - A chocolate bar consisting of a chocolate shell with starch capsules having a liquid filling (raspberry syrup) therein.

The chocolate is a conventional milk chocolate and the raspberry syrup has the following properties: water activity 0.8, viscosity: Newtonian, 0.06 at 25°C, density 1333 kg/m$^3$.

The capsules were prepared using a modified version of the process shown in figures 1 to 3, where no chocolate is applied to the recesses. The edible film was a starch film of thickness 1.5mm and the recesses were hemi-spherical, having a diameter of 7mm. Hence the capsule had an outer diameter of 10mm (recess (7mm) + 2 x wall thickness (1.5mm)).

The total volume of the capsule is 4189mm$^3$ (4/3$\pi$ x 10$^3$) and the total volume of the cavity is 1437mm$^3$ (4/3$\pi$ x 7$^3$). The cavity within the capsule was half-filled with liquid so the caramel filling constituted approximately 17vol% (0.5

x $7^3/10^3$) of the capsule.

The capsules were placed in a pre-formed chocolate shell having dimensions of 20mmx20mmx100mm and backed off with chocolate. The capsules were crisp and the resulting chocolate bar provided a liquid sensation when bitten into without spillage of the low viscosity liquid.

## Claims

1. A process for the preparation of a confectionery composition comprising providing a first sheet of edible film having a plurality of first recesses therein and a second sheet of edible film;
   supplying a liquid filling to the first recesses; and
   contacting the first sheet with the second sheet, whereby sealed capsules containing the liquid filling are formed, wherein molten chocolate is applied to the first recesses before the liquid filling is supplied to the first recesses.

2. The process of claim 1 wherein the second sheet of edible film has a plurality of second recesses therein and the contacting of the first sheet with the second sheet takes place with the first and second recesses in register.

3. The process of claim 1 or claim 2 wherein the first and second edible sheets comprise protein and/or polysaccharide.

4. The process of any one of the preceding claims, further comprising an initial step of providing the first recesses by passing the first edible film sheet through a pair of contra-rotating forming rolls; optionally wherein the first recesses comprise at least two types of recesses having different dimensions.

5. The process of any one of the preceding claims, wherein molten chocolate is applied to the second edible sheet or to the second recesses (when present) before the first edible sheet is contacted with the second edible sheet to form the capsules.

6. The process of any one of the preceding claims additionally comprising a step of placing a plurality of the capsules in an edible shell.

7. The process of any one of the preceding claims, wherein the capsules are interconnected by a web comprising an edible film, optionally wherein the web has substantially the same thickness throughout.

8. The process of claim 6, wherein the plurality of capsules comprises at least two types of capsule therein.

9. The process of any one of the preceding claims wherein at least one capsule comprises from 5 to 20vol% liquid filling.

10. The process of any one of the preceding claims wherein at least one capsule comprises from 5 to 20vol% gas.

11. The process of any one of the preceding claims wherein the liquid filling is selected from one or more of fruit juice; vegetable juice; fruit puree; vegetable puree; fruit sauce; vegetable sauce; honey; sugar syrup; polyol syrup; hydrogenated starch hydrolysates syrup; emulsions; vegetable oil; glycerin; propylene glycol; ethanol; liqueurs; ganache, dairy- based liquids, fondant and an isomalt-comprising solution.

12. The process of claim 11 wherein the liquid filling is a flavoured sugar or sugar-substitute syrup.

13. The process of any one of the preceding claims where the liquid filling has a pour point of less than 10°C.

14. The process of any one of the preceding claims wherein the liquid filling is a Newtonian liquid and has a viscosity measured at 25°C of no more than 1Pa.s.

## Patentansprüche

1. Verfahren zur Herstellung einer Konfektzusammensetzung, umfassend das Bereitstellen eines ersten Blatts essbarer Schicht, die eine Mehrzahl erster Vertiefungen darin aufweist, und eines zweiten Blatts essbarer Schicht;
   das Liefern einer flüssigen Füllung in die ersten Vertiefungen; und
   das Kontaktieren des ersten Blatts mit dem zweiten Blatt, wodurch verschlossene Kapseln, die die flüssige Füllung enthalten, gebildet werden,
wobei geschmolzene Schokolade in die ersten Vertiefungen eingebracht wird, bevor die flüssige Füllung in die ersten Vertiefungen geliefert wird.

2. Verfahren nach Anspruch 1, wobei das zweite Blatt essbarer Schicht eine Mehrzahl zweiter Vertiefungen darin aufweist und das Kontaktieren des ersten Blatts mit dem zweiten Blatt erfolgt, während die ersten und zweiten Vertiefungen aufeinander ausgerichtet sind.

3. Verfahren nach Anspruch 1 oder Anspruch 2, wobei das erste und das zweite essbare Blatt Protein und/oder Polysacharid umfassen.

4. Verfahren nach irgendeinem der vorhergehenden Ansprüche, ferner einen anfänglichen Schritt des Bereitstellens der ersten Vertiefungen durch Hindurchführen des ersten essbaren Schichtblatts durch ein Paar entgegengesetzt rotierender Gestaltungswalzen umfassend; wobei wahlweise die ersten Vertiefungen mindestens zwei Typen Vertiefungen umfassen, die verschiedene Dimensionen aufweisen.

5. Verfahren nach irgendeinem der vorhergehenden Ansprüche, wobei geschmolzene Schokolade auf das zweite essbare Blatt oder in die zweiten Vertiefungen (liegen sie vor) aufgebracht wird, bevor das erste essbare Blatt mit dem zweiten essbaren Blatt unter Bildung der Kapseln kontaktiert wird.

6. Verfahren nach irgendeinem der vorhergehenden Ansprüche, zusätzlich einen Schritt des Positionierens einer Mehrzahl der Kapseln in eine essbare Schale umfassend.

7. Verfahren nach irgendeinem der vorhergehenden Ansprüche, wobei die Kapseln durch eine Bahn miteinander verbunden sind, die eine essbare Schicht umfasst, wobei wahlweise die Bahn im Wesentlichen dieselbe Dicke durchgehend aufweist.

8. Verfahren nach Anspruch 6, wobei die Mehrzahl von Kapseln mindestens zwei Typen Kapseln darin umfasst.

9. Verfahren nach irgendeinem der vorhergehenden Ansprüche, wobei mindestens eine Kapsel 5 bis 20 Vol.-% flüssige Füllung umfasst.

10. Verfahren nach irgendeinem der vorhergehenden Ansprüche, wobei mindestens eine Kapsel 5 bis 20 Vol.-% Gas umfasst.

11. Verfahren nach irgendeinem der vorhergehenden Ansprüche, wobei die flüssige Füllung unter einem oder mehreren von Obstsaft, Gemüsesaft, Obstpüree, Gemüsepüree, Obstsauce, Gemüsesauce, Honig, Zuckersirup, Polyolsirup, hydriertem Stärkehydrolysatsirup, Emulsionen, Pflanzenöl, Glycerin, Propylenglykol, Ethanol, Likören, Ganache, Flüssigkeiten auf der Basis von Milchprodukten, Fondant und einer Isomalt umfassenden Lösung ausgewählt wird.

12. Verfahren nach Anspruch 11, wobei die flüssige Füllung aromatisierter Zucker oder Zuckerersatzsirup ist.

13. Verfahren nach irgendeinem der vorhergehenden Ansprüche, wobei die flüssige Füllung einen Pourpoint von weniger 10 °C aufweist.

14. Verfahren nach irgendeinem der vorhergehenden Ansprüche, wobei die flüssige Füllung eine newtonsche Flüssigkeit ist und eine Viskosität, bei 25 °C gemessen, von nicht mehr als 1 Pa.s aufweist.

## Revendications

1. Procédé de préparation d'une composition pour confiserie comprenant
la fourniture d'une première feuille de film comestible présentant une pluralité de premiers renfoncements à l'intérieur et une seconde feuille de film comestible;
l'alimentation d'un liquide remplissant les premiers renfoncements; et
la mise en contact de la première feuille avec la seconde feuille, moyennant quoi des capsules hermétiquement fermées contenant la garniture liquide sont formées,
du chocolat fondu étant appliqué aux premiers renfoncements, avant que la garniture liquide ne soit alimentée aux premiers renfoncements.

2. Procédé selon la revendication 1, la seconde feuille de film comestible présentant une pluralité de seconds renfoncements à l'intérieur et la mise en contact de la première feuille avec la seconde feuille ayant lieu avec le premier et le second renfoncement bien alignés.

3. Procédé selon la revendication 1 ou la revendication 2, les première et seconde feuilles comestibles comprenant une protéine et/ou un polysaccharide.

4. Procédé selon l'une quelconque des revendications précédentes, comprenant en outre une étape initiale de fourniture des premiers renfoncements en faisant passer la première feuille de film comestible à travers une paire de rouleaux de façonnage en contre-rotation; optionnellement les premiers renfoncements comprenant au moins deux types de renfoncements présentant des dimensions différentes.

5. Procédé selon l'une quelconque des revendications précédentes, le chocolat fondu étant appliqué à la seconde feuille comestible ou aux seconds renfoncements (lorsqu'ils sont présents), avant que la première feuille comestible ne soit mise en contact avec la seconde feuille comestible pour former les capsules.

6. Procédé selon l'une quelconque des revendications précédentes comprenant additionnellement une étape de mise en place d'une pluralité de capsules dans une écorce comestible.

7. Procédé selon l'une quelconque des revendications précédentes, les capsules étant interconnectées par un voile comprenant un film comestible, optionnellement le voile ayant sensiblement la même épaisseur d'un bout à l'autre.

8. Procédé selon la revendication 6, la pluralité des capsules comprenant au moins deux types de capsule à l'intérieur.

9. Procédé selon l'une quelconque des revendications précédentes, au moins une capsule comprenant de 5 à 20 % en vol. de garniture liquide.

10. Procédé selon l'une quelconque des revendications précédentes, dans lequel au moins une capsule comprend de 5 à 20 % en vol. de gaz.

11. Procédé selon l'une quelconque des revendications précédentes, dans lequel la garniture liquide est sélectionnée parmi un ou plusieurs parmi le jus de fruit; le jus de légume; la purée de fruit; la purée de légume; une sauce aux fruits; une sauce aux légumes; le miel; le sirop de sucre; le sirop de polyol; le sirop d'hydrolysats d'amidon hydrogéné; les émulsions; l'huile végétale; la glycérine; le propylène glycol; l'éthanol; les liqueurs; la ganache, les liquides à base de produits laitiers, le fondant et une solution comprenant de l'isomalt.

12. Procédé selon la revendication 11, la garniture liquide étant du sucre aromatisé ou du sirop substitut de sucre.

13. Procédé selon l'une quelconque des revendications précédentes, la garniture liquide ayant un point d'écoulement inférieur à 10°C.

14. Procédé selon l'une quelconque des revendications précédentes, la garniture liquide étant un liquide newtonien et présentant une viscosité mesurée à 25 °C de pas plus de 1 Pa•s.

Fig 1

Fig 2

Fig 3

EP 3 091 843 B1

EP 3 091 843 B1

Fig 4

**EP 3 091 843 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010031502 A
- US 2011081451 A
- US 2003124225 A
- US 2005100640 A